# EUROPÄISCHE PATENTSCHRIFT

(11) **EP 3 188 885 B1**
(45) Veröffentlichungstag und Bekanntmachung des Hinweises auf die Patenterteilung: **09.05.2018**
(21) Anmeldenummer: 15762944.5
(22) Anmeldetag: 27.08.2015
(51) Int. Cl.: B29C 45/16, B29C 45/14, B29C 65/56

(54) **VERFAHREN ZUR HERSTELLUNG MEHRSCHALIGER VERBUNDWERKSTOFFBAUTEILE MIT INTEGRIERTER VERSTÄRKUNGSSTRUKTUR**
METHOD OF MANUFACTURING A MULTILAYERED COMPOSITE PART WITH INTEGRATED REINFORCING STRUCTURE
PROCÉDÉ DE FABRICATION D'UNE PIÈCE MULTI-COUCHE DE MATIÈRE COMPOSITE AVEC UNE STRUCTURE RENFORCÉE INTÉGRÉE

(30) Priorität: 04.09.2014 EP 14183500
(43) Veröffentlichungstag der Anmeldung: 12.07.2017
(73) Patentinhaber: BASF SE, 67056 Ludwigshafen (DE)
(72) Erfinder: BAYERL, Thomas, 55127 Mainz (DE); HOLSCHUH, Rene, 67063 Ludwigshafen (DE); NIXDORF, Andreas, 68159 Mannheim (DE)
(86) Internationale Anmeldenummer: PCT/EP2015/069585
(87) Internationale Veröffentlichungsnummer: WO 2016/034478

(56) Entgegenhaltungen:
- EP-A1- 1 892 079
- DE-A1-102008 013 506
- US-A1- 2002 051 707
- US-A1- 2007 290 411
- US-A1- 2011 244 166

## Beschreibung

Die Erfindung betrifft ein Verfahren zur Herstellung mehrschaliger Verbundwerkstoffbauteile, umfassend die Schritte:
a) Einlegen mindestens eines ersten Bauteils in ein Spritzgusswerkzeug und gegebenenfalls Umformen des ersten Bauteils,
b) Anspritzen mindestens eines Fixierungselementes auf mindestens eine Seite des ersten Bauteils,
c) Einlegen mindestens eines zweiten Bauteils in das Spritzgusswerkzeug und gegebenenfalls Umformen des zweiten Bauteils,
d) Verbinden des ersten Bauteils über die das Fixierungselement aufweisende Seite mit dem zweiten Bauteil, wobei durch das zweite Bauteil hindurch auf und/oder in das Fixierungselement ein Matrixwerkstoff eingespritzt wird.

Die Erfindung betrifft zudem ein mehrschaliges Verbundwerkstoffbauteil, hergestellt nach dem erfindungsgemäßen Verfahren sowie ein Formkörper, aufgebaut aus mindestens einem ersten Bauteil und einem zweiten Bauteil, wobei das erste Bauteil auf mindestens einer Seite ein Fixierungselement aufweist und das zweite Bauteil stoffschlüssig mit dem Fixierungselement verbunden ist.

Aufgrund ihres hohen Potentials für Leichtbau und Recycling gewinnen Faserverbundkunststoffe, insbesondere endlosfaserverstärkte Thermoplaste, stark an Bedeutung. Gerade im Automobilbau wird die Substitution von Metallen durch thermoplastische Laminate dank ihrer guten mechanischen Kennwerte bei gleichzeitig effizienter Verarbeitbarkeit in Kombination mit dem Spritzgießprozess weiter vorangetrieben.

In den letzten Jahren wurden immer mehr metallische Bauteile durch leichtere Faserkunststoffverbundbauteile ersetzt. Insbesondere in der Automobilindustrie werden dazu Verfahren gebraucht, die eine großserientaugliche Produktion effizient und kostengünstig ermöglichen. Während klassische metallische Bauteile im Automobil in der Regel einschalig mit Verstärkungsrippen und Sicken ausgeführt sind, stoßen einschalige Faserkunststoffverbunde (FKV) bei gleichem Bauraum oftmals an ihre Grenzen. Um die Leistungsfähigkeit der FKVs voll auszuschöpfen, werden zweischalige Lösungen eingesetzt. Ein Beispiel für solche zweischaligen Lösungskonzepte sind beispielsweise Sandwichverfahren. Diese Verfahren sind für duroplastische wie auch für thermoplastische Materialien unter Zuhilfenahme von Strukturschäumen etabliert. Dies ist durch den hohen ökonomischen Einsatz jedoch nur bedingt großserientauglich.

Für thermoplastische Prozesse existieren ebenfalls zweischalige Lösungen, die jedoch nicht mit der in jüngster Zeit entwickelten Prozesskombination aus Inmold-Forming und Overmolding (IFO) gekoppelt werden können bzw. nicht das volle Potential des Werkstoffs ausschöpfen können. Beim IFO-Prozess wird ein vorgewärmtes thermoplastisches Organoblech unter Druck umgeformt und anschließend mit einer thermoplastischen Spritzmasse ausgespritzt. Häufig wird dabei eine Rippenstruktur eingebracht, die im Falle einer zweischaligen Ausführung geschlossen werden muss.

Eine aktuelle Lösung besteht darin, ein zweites Organoblech auf die Rippen zu legen und die Ränder der Organobleche durch ein Pressverfahren zu verbinden. Dabei werden aber eingespritzte Rippen nicht an das aufgelegte Organoblech angebunden, was zu einem Performanceverlust führen kann.

Generell sind die aktuellen Verfahren bislang sehr aufwendig, da entweder ein Gas eingespritzt wird, das den Gegendruck zum Laminat aufbringt, damit eine glatte Oberfläche entstehen kann oder es wird in einem nachfolgenden Schritt geklebt bzw. gefügt.

Ein weiteres bekanntes Verfahren funktioniert bislang nur über eine zusätzliche Heißgasdüse, die das Laminat an den Fügestellen nochmals erwärmt.

Das Dokument DE 2008 013 506 A1 beschreibt ein Verfahren zur Herstellung eines Verbundbauteils aus wenigstens einem Formteil aus Metall und/oder Kunststoff, das in einem Spritzgießwerkzeug gefügt und form- und/oder stoffschlüssig mit sich selbst und/oder einem anderen Formteil verbunden wird, wobei das wenigstens eine Formteil beim Schließen des Spritzgießwerkzeuges gefügt wird. Dazu wird beispielsweise an den Fügungsbereichen ein Klebstoff verwendet.

Aus der DE 195 00 790 A1 ist ein Verfahren zur Herstellung von Kunststoff/Metallverbundkörpern mit einer Kombination von Metallfügen bzw. Verpressen von wenigstens zwei Einzelblechen und Spritzgießen eines thermoplastischen Kunststoffes bekannt. Dabei werden in einem ersten Schritt einzelne zu verbindende Bleche in das Spritzgießwerkzeug eingelegt und formschlüssig durch Fügen oder Verpressen miteinander verbunden. In einem zweiten Schritt werden die Bleche durch Anspritzen von Durchbrüchen der Bleche mit thermoplastischem Kunststoff miteinander und mit dem in der restlichen Kavität des Spritzgießwerkzeuges gebildeten Kunststoffteil verbunden. Ein Nachteil dieses bekannten Verfahrens liegt darin, dass das Verpressen der Formteile und das Anspritzen von Kunststoff zwar in einer Vorrichtung, aber in zwei getrennten Verfahrensschritten erfolgen.

In der DE 10 2009 010 440 A1 wird eine Baugruppe bestehend aus einer Außenschale und einem mit der Außenschale verbundenen Strukturbauteil beschrieben. Dabei sind das Strukturbauteil und die Außenschale zumindest bereichsweise voneinander beabstandet angeordnet und das Strukturbauteil ist zumindest bereichsweise mit der Außenschale über eine kraftschlüssige Verbindung verbunden, um die Lage des Strukturbauteils relativ zur Außenschale zu fixieren.

In der DE 195 04 726 A1 wird ein flächenhaftes, tragfähiges und torsionssteifes Element aus zwei Teilen mit einer Einschubvorrichtung und inneren Verstärkungen beschrieben. Dabei werden die beiden Hälften durch eine Einschubvorrichtung und entsprechende Verbindungselemente miteinander gefügt. Durch die gezielte Funktionsintegration bei einem der beiden Teilhälften - beispielsweise Herstellung von Verbindungselementen am Kunststoffteilelement in der Fertigung - ergibt sich die Möglichkeit des Verbindens unterschiedlicher Werkstoffkombinationen zu einem flächenhaften, tragfähigen und torsionssteifen Element.

In der DE 10 2011 111 743 A1 wird ein FVK-Bauteil und ein Herstellungsverfahren dafür beschrieben, wobei das Bauteil zumindest einen Textileinleger im Verbund mit einer thermoplastischen Matrix aufweist und das angespritzte Verstärkungsrippen aus thermoplastischem Kunststoff umfasst. Die angespritzten thermoplastischen Kunststoffrippen des FVK-Bauteils umfassen Kurzfasern aus einem Verstärkungsmaterial mit einem Volumenanteil von zumindest 30 %.

In der DE 10 2013 011 316 A1 wird eine Unterbodenverkleidung mit einer Schale, die eine Außenschale ist, beschrieben. Mit der Außenschale ist eine Innenschale verbunden, wobei zwischen der Innenschale und der Außenschale zumindest ein Zwischenraum vorliegt.

Die DE 10 2009 041 838 A1 beschreibt ein Verfahren zur Herstellung einer kunststofftechnischen Fügeverbindung zwischen mindestens zwei mindestens abschnittsweise plattenförmigen Elementen oder Teilbereichen eines Bauteils aus Kunststoff.

Die DE 42 42 059 C1 beschreibt ein Verfahren zum thermischen Verbinden von Kunststoff-Formkörpern mit weiteren Kunststoffkomponenten mittels einer durch Plasmapolymerisation aufgetragenen Zwischenschicht. Das Verfahren ist dadurch gekennzeichnet, dass die Zwischenschicht durch Plasmapolymerisation aufgetragen und soweit eingestellt wird, dass sie zumindest gegenüber den Formkörpern eine niedrige Schmelztemperatur besitzt, wobei die Zwischenschicht den Formkörpern/Folien/Partikelschäumen ähnlich ist, wobei jedoch durch geeignete Abstimmung der Plasmabedingungen in der Zwischenschicht eine andersartige Molekülkettenlänge oder Vernetzungsstruktur eingestellt wird.

Aus der DE 10 2011 118 980 A1 ist ein Verfahren zur Herstellung eines Außenmoduls mit einer Außenbeplankung für eine modular aufgebaute Gehäusekomponente bekannt. Dazu wird die thermoplastische FVK-Innenschale durch Zuschneiden und Formen eines thermoplastischen Endlosfaserhalbzeugs entsprechend einer Innenschalenkontur und Hinterspritzen mit den Versteifungselementen bereitgestellt. Danach erfolgt ein Zuschneiden und Vorformen eines thermoplastischen Endlosfaserhalbzeugs entsprechend einer Außenschalenkontur, gefolgt von dem Einlegen der thermoplastischen FVK-Innenschale und des entsprechend der Außenschalenkontur vorgeformten thermoplastischen Endlosfaserhalbzeugs in ein Werkzeug und Schließen des Werkzeugs. Danach wird das vorgeformte thermoplastische Endlosfaserhalbzeug mit Druck beaufschlagt und es erfolgt ein Ausformen zu der FVK-Außenschale und Fügen der FVK-Innenschale und der FVK-Außenschale unter Erhalt eines Rohaußenmoduls.

Keines der im Stand der Technik bekannten Verfahren beschreibt ein großserientaugliches Verfahren zur Herstellung mehrschaliger Verbundwerkstoffbauteile mit stoffschlüssig angebundener Verstärkungsstruktur.

Aufgabe der vorliegenden Erfindung ist es daher, ein Verfahren zu großserientauglicher Fertigung geschlossener, mehrschaliger Bauteile, insbesondere FKV-Bauteile mit einer beidseitig angebundenen Verstärkungsstruktur bereitzustellen. Dabei soll besonders bevorzugt das FKV-Bauteil unter ökonomisch nachhaltigen Bedingungen herstellbar sein.

Gelöst wird diese Aufgabe durch ein Verfahren zur Herstellung mehrschaliger Verbundwerkstoffbauteile, umfassend die Schritte
a) Einlegen mindestens eines ersten Bauteils in ein Spritzgusswerkzeug und gegebenenfalls Umformen des ersten Bauteils,
b) Anspritzen mindestens eines Fixierungselementes auf mindestens eine Seite des ersten Bauteils,
c) Einlegen mindestens eines zweiten Bauteils in das Spritzgusswerkzeug und gegebenenfalls Umformen des zweiten Bauteils,
d) Verbinden des ersten Bauteils über die das Fixierungselement aufweisende Seite mit dem zweiten Bauteil, wobei durch das zweite Bauteil hindurch auf und/oder in das Fixierungselement ein Matrixwerkstoff eingespritzt wird.

Durch das erfindungsgemäße Verfahren ist es möglich, mehrschalige, insbesondere doppelschalige Verbundwerkstoffbauteile bereitzustellen, die keine Klebstelle enthalten. Da beim Verbinden des ersten Bauteils und des zweiten Bauteils gemäß der vorliegenden Erfindung keine Klebstoffe verwendet werden, ist es möglich, dass die hergestellten mehrschaligen Verbundwerkstoffbauteile besser recycelt werden können. Da der Recyclingprozess von Verbundwerkstoffbauteilen das Trennen der Verstärkungsfaseranordnung und der thermoplastischen Kunststoffmatrix erforderlich macht, ist die Gegenwart von Klebstoffen für einen späteren Recyclingprozess nachteilig. Aufgrund dessen können die mit dem erfindungsgemäßen Verfahren hergestellten Verbundwerkstoffbauteile später kostengünstiger und nachhaltiger recycelt werden.

Unter einem mehrschaligen, insbesondere doppelschaligen Verbundwerkstoffbauteil gemäß der vorliegenden Erfindung wird ein (End)Bauteil, insbesondere ein Verbundbauteil, verstanden, das einen Querschnitt mit einer geschlossenen Kontur aufweist. Derartige Verbundbauteile haben die Vorteile, dass sie gegenüber massiven Verbundbauteilen eine höhere Torsions- und/oder Biegesteifigkeit oder eine gleiche Steifigkeit bei einem geringen Gewicht des Verbundbauteils aufweisen.

Nachdem mindestens ein erstes Bauteil bereitgestellt wird, erfolgt in dem erfindungsgemäßen Verfahren in Schritt a) das Einlegen mindestens eines ersten Bauteils in ein Spritzgusswerkzeug und gegebenenfalls Umformen des ersten Bauteils. Die dazu notwendigen Spritzgusswerkzeuge sind im Formenbau dem Fachmann bekannt. Ein etwaiges Umformen in Schritt a) bedeutet, dass das mindestens eine erste Bauteil beispielsweise durch Erwärmen verformt werden kann. Ebenfalls ist es möglich, dass das mindestens eine erste Bauteil bereits die gewünschte Form besitzt, so dass ein Umformen in Schritt a) nicht notwendig ist.

In dem darauffolgenden Schritt b) erfolgt ein Anspritzen mindestens eines Fixierungselementes auf mindestens einer Seite des ersten Bauteils. Ebenfalls kann ein Anspritzen mindestens eines weiteren Fixierungselementes auf dieser Seite erfolgen, so dass das eine erste Bauteil mindestens zwei Fixierungselemente aufweist. Vorzugsweise können die Fixierungselemente symmetrisch auf dem ersten Bauteil angeordnet sein. Handelt es sich beispielsweise um kreisförmige (z. B. Sicken) Fixierungselemente, können diese beispielsweise untereinander linear angeordnet sein, wobei zusätzlich zu dieser linearen Anordnung parallel verschobene Anordnungen vorliegen können. Liegt das Fixierungselement beispielsweise als Rippe vor, können diese Rippen zueinander parallel angeordnet sein. Es ist aber auch möglich, dass die Rippen kreuzförmig angeordnet sind. Dadurch lassen sich bevorzugt höhere Biegesteifigkeiten im Verbundwerkstoffbauteil erzielen.

In dem darauffolgenden Schritt b) ist es ebenfalls möglich, dass Fixierungselemente auf zwei gegenüberliegenden Seiten des ersten Bauteils angespritzt werden.

Der nach dem Schritt b) folgende Schritt c) betrifft das Einlegen mindestens eines zweiten Bauteils in das Spritzgusswerkzeug und gegebenenfalls Umformen des zweiten Bauteils. Ein etwaiges Umformen in Schritt c) bedeutet, dass das mindestens eine zweite Bauteil beispielsweise durch Erwärmen verformt werden kann. Ebenfalls ist es möglich, dass das mindestens eine zweite Bauteil bereits die gewünschte Form besitzt, so dass ein Umformen in Schritt c) nicht notwendig ist.

Der dem Schritt c) folgende Schritt d) betrifft das Verbinden des ersten Bauteils über die mit dem Fixierungselement aufweisende Seite mit dem zweiten Bauteil, wobei durch das zweite Bauteil hindurch auf und/oder in das Fixierungselement ein Matrixwerkstoff eingespritzt wird. Ein Einspritzen durch das zweite Bauteil hindurch bedeutet, dass das Material an dieser Stelle von einer entsprechenden Vorrichtung und/oder einem entsprechendem Materialstrom, insbesondere des Matrixwerkstoffes, aufgebrochen wird und der Matrixwerkstoff auf und/oder in das Fixierungselement eingebracht werden kann. Beispielsweise kann der Matrixwerkstoff unter einem erhöhten Druck als konzentrierter Strahl durch das zweite Bauteil hindurchströmen und auf und/oder in das Fixierungselement eingespritzt werden. Es kann auch ein Metalldorn durch das zweite Bauteil durchgeführt werden, dem der Matrixwerkstoff dann folgt. Es wird somit ein Loch vorgeformt, das dem Matrixwerkstoff als Übergang zur Kavität des mindestens einen Fixierungselementes dient. Es ist ebenso möglich, dass das zweite Bauteil nur lokal aufgeheizt wird und damit lokal weich für die Strömung des Matrixwerkstoffs wird bzw. dass das vorher beschriebene Loch für den Matrixwerkstoff bereits im zweiten Bauteil vorgeformt ist und das Bauteil kalt bleibt.

Bevorzugt erfolgt durch das Verbinden des ersten Bauteils und des zweiten Bauteils in Schritt d) der vorliegenden Erfindung ein mehrschaliger Aufbau. Insbesondere kann ein dreiteiliger Aufbau erzielt werden, wenn das erste Bauteil mindestens zwei Fixierungselemente auf sich gegenüberliegenden Seiten des ersten Bauteils aufweist. Nach dem Verbinden mit dem zweiten Bauteil wird ein dreischaliger Aufbau generiert.

Es ist zudem möglich, dass zwischen die aufeinanderfolgenden Schritte a), b), c) und d) Zwischenschritte eingebaut werden können und/oder vor dem Schritt a) und/oder nach dem Schritt d) weitere Schritte erfolgen können.

Das erste und/oder zweite Bauteil kann auch als Halbzeug und/oder flächiges Halbzeug bezeichnet werden.

Besonders bevorzugt ist das erste und/oder zweite Bauteil aus einem, gegebenenfalls faserverstärkten, Polymer gefertigt. Dabei kann das Polymer ein Thermoplast oder ein Duroplast sein. Insbesondere kann das Bauteil ein verstärktes Polymer sein. Eine Verstärkung kann durch einen vom Polymermaterial unterschiedlichen Stoff erzielt werden.

Vorzugsweise weist in dem erfindungsgemäßen Verfahren das Fixierungselement mindestens eine Kavität auf. Vorzugsweise weist das Fixierungselement mindestens zwei Kavitäten auf. Vorteilhafterweise sind die Kavitäten derart beschaffen, dass sich neben der stoffschlüssigen auch eine form- oder kraftschlüssige Verbindung beim Verbinden in Schritt d) ausbildet.

Besonders bevorzugt dient das Fixierungselement als Versteifungselement.

Vorzugsweise kann das Fixierungselement in dem Schritt b) des erfindungsgemäßen Verfahrens als eine Hohlkörperstruktur ausgebildet werden. Dabei kann die Hohlkörperstruktur beispielsweise die Form eines hohlen Würfels, Quaders, Zylinders oder abgeschnittenen Kegels aufweisen. In diese Hohlkörperstruktur kann ein Auffüllwerkstoff eingespritzt werden, wobei höchstens 99 % des inneren Volumens mit dem Auffüllwerkstoff aufgefüllt werden. Vorzugsweise kommt es durch diese nicht komplette Auffüllung zu einer Kavität.

Vorzugsweise besteht das Fixierungselement und/oder der Auffüllwerkstoff aus einem thermoplastischen Polymermaterial. Dazu eignen sich alle dem Fachmann bekannten Thermoplaste. Üblicherweise eingesetzte Thermoplaste sind z. B. Polyolefine, Polyamide, Polyurethane, Polyester, Polyether, Polyacrylate, Polyacetale sowie Polymere aus Vinylgruppen enthaltenden Monomeren.

Im Allgemeinen eingesetzte Polyolefine sind zum Beispiel Polyethylen, Polypropylen, Polybuten-1, Polytetrafluorethylen. Als Polyamide eignen sich zum Beispiel Polyamid 6, Polyamid 11, Polyamid 6/6, Polyamid 6/10 oder Polyamid 6/12. Geeignete Polyester sind beispielsweise Polyethylenterephthalat, Polybutylenterephthalat oder Polycarbonat. Üblicherweise eingesetzte Polyacrylate sind beispielsweise Poly(meth)acrylsäureester, Polymethacrylat oder Polyacrylnitril. Als Polyacetal wird beispielsweise Polyoxymethylen eingesetzt. Geeignete Polymere, die Monomereinheiten mit Vinyl-Gruppen enthalten, sind zum Beispiel Polyvinylchlorid, Polyvinylidenchlorid, Polystyrol, Polyvinylcarbazol, Polyvinylacetat oder Polyvinylalkohol. Weitere geeignete Thermoplaste sind Polyethersulfon, Polyetherimid, Acrylnitrilbutadienstyrol, Styrolacrylnitril und Acrylester-Styrol-Acrylnitril. Weiterhin können auch Mischungen der vorstehend genannten Polymere oder Copolymerisate aus den zur Bildung der vorstehend genannten Homopolymeren eingesetzten Monomereinheiten eingesetzt werden.

Besonders bevorzugte Thermoplaste für das Fixierungselement sind Polyamide.

Vorzugweise erfolgt in Schritt b) des erfindungsgemäßen Verfahrens das Anspritzen des Fixierungselements mit einem Matrixwerkstoff wie er in Schritt d) verwendet wird.

Es ist ebenfalls möglich, die Kavität in dem Fixierungselement dadurch herzustellen, dass eine Maske mit einer entsprechenden Form, insbesondere während des Schritts b), verwendet wird, die nach dem Schritt b) entfernt werden kann.

Vorzugsweise weist in dem erfindungsgemäßen Verfahren die Kavität ein Aspektverhältnis in einem Bereich von 1 : 1 bis 1 : 100 auf. Insbesondere weist die Kavität ein Aspektverhältnis in einem Bereich von 1 : 2 bis 1 : 50 auf.

Das Aspektverhältnis ist das Verhältnis der Breite zur Höhe des Fixierungselementes.

Bevorzugt wird in dem erfindungsgemäßen Verfahren beim Verbinden des ersten Bauteils und des zweiten Bauteils ein Matrixwerkstoff in die Kavität des Fixierungselementes eingespritzt. Vorzugsweise werden 50 bis 300 % des Kavitätsvolumens an Matrixwerkstoff eingespritzt. Ganz besonders bevorzugt werden 80 bis 250% des Kavitätsvolumens an Matrixwerkstoff eingespritzt. Insbesondere werden 105 bis 125 % des Kavitätsvolumens an Matrixwerkstoff eingespritzt.

Werden mehr als 100 % des Kavitätsvolumens an Matrixwerkstoff eingespritzt, kommt es zu einem Überlaufen des Matrixwerkstoffes aus der Kavität heraus. Vorzugsweise kann dieses überlaufene Matrixmaterial als Grundlage für die form- und stoffschlüssige Verbindung des ersten und des zweiten Bauteils dienen.

Ganz besonders bevorzugt kann das überlaufene Matrixmaterial im Schritt d) zum Verbinden der Seitenränder des ersten Bauteils und des zweiten Bauteils verwendet werden.

Bevorzugt umfasst in dem erfindungsgemäßen Verfahren das erste Bauteil und/oder das zweite Bauteil eine Verstärkerfaseranordnung und eine thermoplastische Kunststoffmatrix. Insbesondere bevorzugt umfasst das erste und/oder zweite Bauteil eine Verstärkungsfaseranordnung in einer thermoplastischen Kunststoffmatrix.

Vorzugsweise umfassen das erste und das zweite Bauteil unterschiedliche Verstärkungsfaseranordnungen. Vorzugsweise umfassen das erste und zweite Bauteil die gleiche thermoplastische Kunststoffmatrix.

Als Verstärkungsfaseranordnung kommen vorzugsweise Kohlenstofffasern, Glasfasern, Aramidfasern, Metallfasern oder Kombinationen davon in Frage. Die verwendeten Faseranordnungen weisen häufig orientierte Fasern auf und umfassen Gelege, Gewebe, Netze, Gestricke, Geflechte und/oder Kombinationen davon. Insbesondere handelt es sich bei dem ersten und/oder zweiten Bauteil um Faserverbundkunststoffe. Diese Verbundbauteile aus faserverstärkten Kunststoffen (Faserverbundkunststoff) sind mechanisch äußerst belastbar und bieten gleichzeitig ein hohes Gewichteinsparungspotential. Insbesondere finden sie im Leichtbau zunehmend Verwendung. Das erste und/oder zweite Bauteil kann somit durch eine Verstärkungsfaser gebildet werden, die beispielsweise mit einem Kunststoffmaterial (Kunststoffmatrix) durchtränkt bzw. imprägniert oder von einem Kunststoffmaterial (Kunststoffmatrix) umgeben sein kann.

Die Herstellung von Faserverbundkunststoffen bzw. Faserverbundkunststoffbauteilen ist beispielsweise aus der DE 10 2008 052 000 A1 bekannt. Dort wird als Verstärkungsteil zumindest ein lose strukturierter, aus mit einem Imprägniermittel kerntief voll- oder teilimprägnierten Multifilament-Fasern gebildeter Textil-Einleger mittels eines Spritzgießwerkzeuges mit einem Matrixwerkstoff umspritzt und/oder hinterspritzt.

Bevorzugt können die Fasern dabei in Form von Einzelfasern, Rovings oder Fasermatten eingesetzt werden.

Wenn die Fasern in Form von Langfasern, als Rovings oder als Fasermatte eingesetzt werden, so werden die Fasern üblicherweise in eine Form eingelegt und anschließend wird dem Polymermaterial imprägniert. Der so hergestellte Einsatz kann einlagig oder mehrlagig aufgebaut sein. Bei einem mehrlagigen Aufbau können die Fasern der einzelnen Lagen jeweils gleichgerichtet sein oder die Fasern der einzelnen Lagen sind gegeneinander in einem Winkel von -90° bis +90° zueinander angeordnet.

Neben dem Einlegen der Fasern in eine Form und dem Umgießen mit der Polymermasse ist es alternativ jedoch auch möglich, insbesondere bei Einsatz von gerichteten Langfasern, diese durch ein Extrusionswerkzeug zu leiten und mit der Kunststoffmasse während der Extrusion zu ummanteln.

Bei Einsatz von Kurzfasern werden diese üblicherweise der Polymermasse vor dem Aushärten zugemischt. Der Einsatz kann zum Beispiel durch Extrusion, Spritzgießen oder Gießen gefertigt werden. Im Allgemeinen sind die Kurzglasfasern im Einsatz ungerichtet enthalten. Wenn der Einsatz durch ein Spritzgussverfahren hergestellt wird, kann sich eine Ausrichtung der Kurzfasern durch das Pressen der die Fasern enthaltenden Polymermasse durch eine Anspritzdüse in das Werkzeug ergeben. Ebenso kann sich bei einer Extrusion der Polymermasse eine Ausrichtung der Kurzfasern aufgrund des Pressens durch das Extrusionswerkzeug ergeben.

Als Verstärkungsmittel eignen sich neben Fasern auch beliebige andere Füllstoffe, die dem Fachmann bekannt sind und die steifigkeits- und/oder festigkeitserhöhend wirken. Hierzu zählen unter anderem auch beliebige Partikel ohne Vorzugsrichtung. Derartige Partikel sind im Allgemeinen kugelförmig, plättchenförmig oder zylindrisch. Die tatsächliche Form der Partikel kann dabei von der idealisierten Form abweichen. So können insbesondere kugelförmige Partikel in der Realität zum Beispiel auch tropfenförmig oder abgeflacht sein.

Neben Fasern eingesetzte Verstärkungsmaterialien sind zum Beispiel Graphit, Kreide, Talkum und nanoskalige Füllstoffe.

Für die thermoplastische Kunststoffmatrix eignen sich alle, dem Fachmann bekannten Thermoplaste. Insbesondere eignen sich Thermoplaste, die verstärkt werden können. Üblicherweise eingesetzte Thermoplaste sind zum Beispiel Polyolefine, Polyamide, Polyurethane, Polyester, Polyether, Polyacrylate, Polyacetale sowie Polymere aus Vinylgruppen enthaltenden Monomeren.

Im Allgemeinen eingesetzte Polyolefine sind zum Beispiel Polyethylen, Polypropylen, Polybuten-1, Polytetrafluorethylen. Als Polyamide eignen sich zum Beispiel Polyamid 6, Polyamid 11, Polyamid 6/6, Polyamid 6/10 oder Polyamid 6/12. Geeignete Polyester sind beispielsweise Polyethylenterephthalat, Polybutylenterephthalat oder Polycarbonat. Üblicherweise eingesetzte Polyacrylate sind beispielsweise Poly(meth)acrylsäureester, Polymethacrylat oder Polyacrylnitril. Als Polyacetal wird beispielsweise Polyoxymethylen eingesetzt. Geeignete Polymere, die Monomereinheiten mit Vinyl-Gruppen enthalten, sind zum Beispiel Polyvinylchlorid, Polyvinylidenchlorid, Polystyrol, Polyvinylcarbazol, Polyvinylacetat oder Polyvinylalkohol. Weitere geeignete Thermoplaste sind Polyethersulfon, Polyetherimid, Acrylnitrilbutadienstyrol, Styrolacrylnitril und Acrylester-Styrol-Acrylnitril. Weiterhin können auch Mischungen der vorstehend genannten Polymere oder Copolymerisate aus den zur Bildung der vorstehend genannten Homopolymeren eingesetzten Monomereinheiten eingesetzt werden.

Besonders bevorzugte Thermoplaste für die thermoplastische Kunststoffmatrix sind Polyamide.

Die eingesetzten Polymere können auch weitere Zusatzstoffe enthalten. Dies sind z. B. übliche Weichmacher, Schlagzähmodifizierer, Flammschutzmittel und weitere, dem Fachmann bekannte Additive, die üblicherweise Polymeren zugesetzt werden.

Besonders bevorzugt entspricht in dem erfindungsgemäßen Verfahren das Material des Matrixwerkstoffes dem Material der thermoplastischen Kunststoffmatrix. Insbesondere entspricht das Material des Matrixwerkstoffes dem Material der thermoplastischen Kunststoffmatrix des ersten oder zweiten Bauteils. Dadurch lassen sich besonders gut stoffschlüssige, formschlüssige und/oder kraftschlüssige Verbindungen ausbilden.

Bevorzugt wird in dem erfindungsgemäßen Verfahren beim Verbinden des ersten Bauteils und des zweiten Bauteils in die Kavität des Fixierungselements gespritzt, wobei die Oberfläche der Kavität zumindest teilweise schmilzt. Dies kann beispielsweise dadurch erzielt werden, dass der Matrixwerkstoff auf eine Temperatur erwärmt ist, die höher und/oder gleich dem Schmelzpunkt des Materials des Fixierungselements ist.

Vorzugsweise entsteht in dem erfindungsgemäßen Verfahren durch die Umformung des ersten Bauteils und/oder des zweiten Bauteils jeweils ein einschaliger Faserkunststoffverbund. Die Umformung kann unter Anwendung eines entsprechenden Werkzeuges, beispielsweise ein Spritzwerkzeug, für das vorgewärmte Bauteil erfolgen.

Bevorzugt ist in dem erfindungsgemäßen Verfahren das Fixierungselement ausgewählt aus der Gruppe bestehend aus Rippen, Wölbungen, Sicken, Nuten, Stege oder Kombinationen davon.

Besonders bevorzugt ist in dem erfindungsgemäßen Verfahren das erste Bauteil und/oder das zweite Bauteil ein langfaserverstärkter Thermoplast, ein endlosfaserverstärkter Thermoplast und/oder ein unidirektionales, verstärktes Tape. Dabei weisen die Langfasern eine mittlere Faserlänge in einem Bereich von 2 µm bis 25 µm auf. Die Endlosfaser geht üblicherweise über die komplette Bauteillänge bzw. die Länge kann frei gewählt werden.

Bevorzugt ist in dem erfindungsgemäßen Verfahren das erste Bauteil und/oder das zweite Bauteil ein Organoblech. Unter Organoblechen werden plattenförmige endlosfaserverstärkte Thermoplasthalbzeuge verstanden. Organobleche lassen sich unter Wärmeeinwirkung verformen und ermöglichen kurze Prozesszyklen und sind außerdem gut schweißbar. Im Gegensatz zu metallischen Blechen entfällt bei der Verwendung von Organoblechen unter Umständen der Korrosionsschutz.

Organobleche können dabei aus speziellen Faseranordnungen, die Fasern in definierten Orientierungen aufweisen, eingebettet in der thermoplastischen Kunststoffmatrix bestehen. So kann es sich bei den Faseranordnungen, insbesondere der Verstärkungsfaseranordnungen, um Gewebe, Gelege, Gestricke oder Kombinationen davon handeln.

Bevorzugt wird in dem erfindungsgemäßen Verfahren das zweite Bauteil vor dem Verbinden mit dem ersten Bauteil auf eine Temperatur von bis zu 50°C unter bis hin zu 50°C über den Schmelzpunkt oder der Glasübergangstemperatur gebracht. Vorzugsweise bezieht sich der Schmelzpunkt oder die Glasübergangstemperatur auf das Material der thermoplastischen Kunststoffmatrix. Besonders bevorzugt wird das zweite Bauteil vor dem Verbinden mit dem ersten Bauteil lokal vorgewärmt, um den Energieverbrauch des Verfahrens zu minimieren.

Bevorzugt wird ein erfindungsgemäßes Verfahren, bei dem nach und/oder beim Verbinden des ersten Bauteils und des zweiten Bauteils die Seitenränder des zweiten Bauteils an das erste Bauteil gepresst werden.

Ein weiterer Gegenstand der vorliegenden Erfindung ist ein mehrschaliges Verbundwerkstoffbauteil, hergestellt nach dem erfindungsgemäßen Verfahren. Vorzugsweise wird ein zweiteiliges Verbundwerkstoffbauteil hergestellt.

Ein weiterer Gegenstand der Erfindung ist ein Formkörper, aufgebaut aus mindestens einem ersten Bauteil und einem zweiten Bauteil, wobei das erste Bauteil auf mindestens einer Seite ein Fixierungselement aufweist und das zweite Bauteil stoffschlüssig mit dem Fixierungselement verbunden ist.

Alle vorstehend aufgeführten Ausführungsformen und bevorzugten Ausführungsformen sind frei miteinander kombinierbar, sofern der Kontext nicht eindeutig dagegenspricht.

Bevorzugt umfasst der Begriff "umfassend" auch den Begriff "bestehend aus".

Die Erfindung und der Stand der Technik sollen anhand der Figuren weiter illustriert werden:
Figur 1 zeigt den schematischen Ablauf einer Kombination aus Inmold Forming and Overmolding (CIFO)-Prozessen (Stand der Technik).
Figur 2 zeigt den schematischen Ablauf des erfindungsgemäßen Verfahrens.
Figur 3 zeigt das erste und das zweite Bauteil.
Figur 4 zeigt ein Fixierungselement mit einer Kavität im Schnitt.
Figur 4a zeigt ein Fixierungselement mit einer Kavität in Draufsicht.
Figur 5 zeigt ein Stadium bei der Herstellung eines doppelschaligen Verbundwerkstoffbauteils aufgebaut aus einem ersten und einem zweiten Bauteil während des Einspritzvorgangs des Matrixwerkstoffes.
Figur 5a zeigt ein Stadium bei der Herstellung eines doppelschaligen Verbundwerkstoffbauteils aufgebaut aus einem ersten und zweiten Bauteil nach dem Einspritzvorgang des Matrixwerkstoffes.

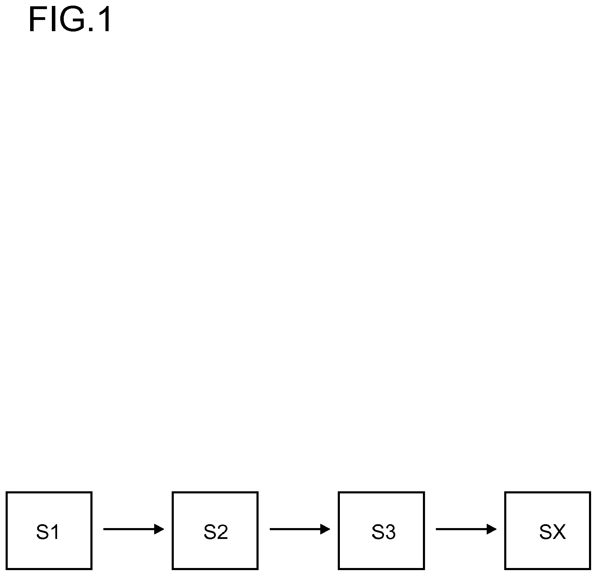

Figur 1 zeigt den schematischen Ablauf eines CIFO-Prozesses. In Schritt S1 wird dazu ein vorkonfektioniertes Halbzeug, welches entweder ein Laminat oder Tape sein kann, gegebenenfalls in einen Spannrahmen gespannt. Dann erfolgt der Transport zu einem Ofen, damit der Spannrahmen mit dem Halbzeug erwärmt werden kann. Dieser Ofen kann beispielsweise ein IR-Strahler sein. Daran schließt sich das Bestücken des Werkzeuges der Spritzgussmaschine an. In dem Inmold Forming Prozessschritt S2 wird das Werkzeug geschlossen und das Halbzeug umgeformt. Nach dem Umformen werden in dem Overmolding-Schritt S3 die Rippen mit einer Spritzgussmasse angespritzt. Danach wird in weiteren Schritten SX das Werkzeug geöffnet und es erfolgen ein optionaler Entformungsschritt sowie ein optionaler Besäumungsschritt, um das Endbauteil zu erhalten.

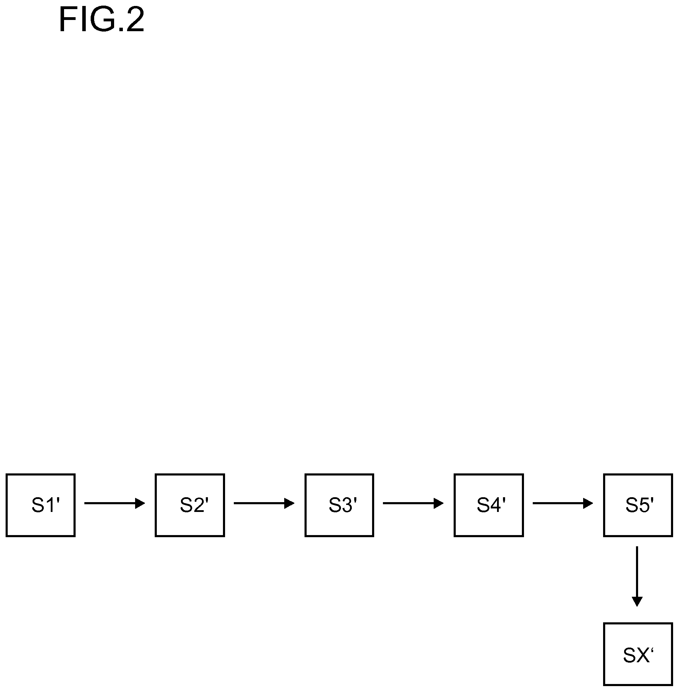

Figur 2 zeigt den schematischen Ablauf des erfindungsgemäßen Verfahrens. Dazu wird in Schritt S1' ein vorkonfektioniertes flächiges Halbzeug aus einer thermoplastischen Matrix und einer Verstärkungsfaseranordnung optional auf eine Spannvorrichtung gespannt. Danach kann entweder das flächige Halbzeug im Werkzeug erwärmt werden oder das Werkzeug bestückt werden. Im Schritt S2' wird das Werkzeug geschlossen und das Halbzeug umgeformt. Somit entsprechen die Schritte S1' und S2' dem ersten Schritt a) in dem erfindungsgemäßen Verfahren. Danach werden in Schritt S3' Fixierungselemente entsprechend angespritzt. Die Fixierungselemente werden nur auf einer Seite oder auf zwei gegenüberliegenden Seiten des Halbzeugs angespritzt. Der Schritt S3' entspricht somit dem Schritt b) in dem erfindungsgemäßen Verfahren. Die Fixierungselemente werden als Spritzgussmasse, welche der thermoplastischen Matrix entspricht, entsprechend eingespritzt. Danach wird in Schritt S4' das Werkzeug geöffnet und es erfolgt wieder entweder das Bestücken des Werkzeugs oder das Erwärmen des zweiten flächigen Halbzeugs gefolgt von entweder dem Erwärmen des zweiten flächigen Halbzeugs oder dem Bestücken des Werkzeugs. Der Schritt S4' entspricht Schritt c) in dem erfindungsgemäßen Verfahren. Nachdem das Werkzeug geschlossen wurde, erfolgt gegebenenfalls ein Umformen des zweiten Halbzeugs in Schritt S4'. Danach wird in Schritt S5' durch das zweite Halbzeug hindurch in die Kavität der Fixierungselemente eine Spritzgussmasse gespritzt. Dadurch kommt es zu einer stoffschlüssigen Verbindung der beiden Halbzeuge. Nach dem Öffnen des Werkzeuges in Schritt SX' und einem eventuellen Entformen erhält man ein mehrschaliges Bauteil bzw. das Endbauteil.

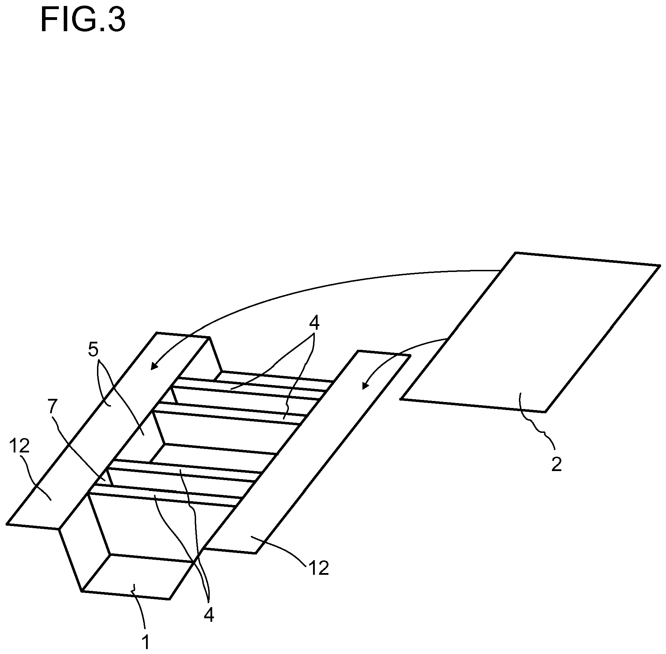

Figur 3 zeigt ein erstes Bauteil 1 und ein zweites Bauteil 2. In dem ersten Bauteil 1 sind die Seitenränder 12 sowie die Fixierungselemente 4 und die Kavität 7 ersichtlich. Auf das erste Bauteil 1 wird das zweite Bauteil 2 entsprechend aufgebracht. In Figur 3 wird ein bestimmter Prozessabschnitt des erfindungsgemäßen Verfahrens illustriert, ohne dass das Spritzgusswerkzeug gezeigt wird. Nachdem das erste Bauteil 1 in das Spritzgusswerkzeug eingelegt und umgeformt wurde, hat es die in Figur 3 illustrierte Ausgestaltung mit den Seitenrändern 12. Die in Schritt b) des erfindungsgemäßen Verfahrens angespritzten Fixierungselemente 4 sind ebenfalls illustriert. Insgesamt befinden sich in Figur 3 vier Fixierungselemente 4, wobei jeweils zwei so angeordnet sind, dass sie eine Kavität 7 zwischen ihnen aufweisen, in die später der Matrixwerkstoff eingespritzt wird. Die Fixierungselemente 4 sind dabei so angeordnet, dass sie in einer Ebene mit der Oberseite der Seitenränder 12 des ersten Bauteils 1 abschließen. Somit kann das zweite Bauteil 2, welches hier als flächiges Bauteil 2 dargestellt ist, sowohl die Seitenränder 12 des ersten Bauteils 1 kontaktieren als auch eine Fläche der Fixierungselemente 4. In Figur 3 wird der Zustand vor dem Verbinden des ersten Bauteils 1 über die mit dem Fixierungselement 4 aufweisende Seite 5 mit dem zweiten Bauteil 2 illustriert. Sowohl das erste Bauteil 1 als auch das zweite Bauteil 2 bestehen aus einer Verstärkungsfaseranordnung und einer thermoplastischen Kunststoffmatrix. Das Fixierungselement 4 besteht ebenfalls aus einer thermoplastischen Kunststoffmatrix.

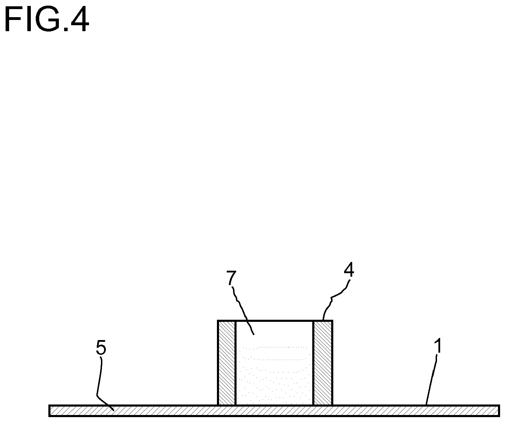

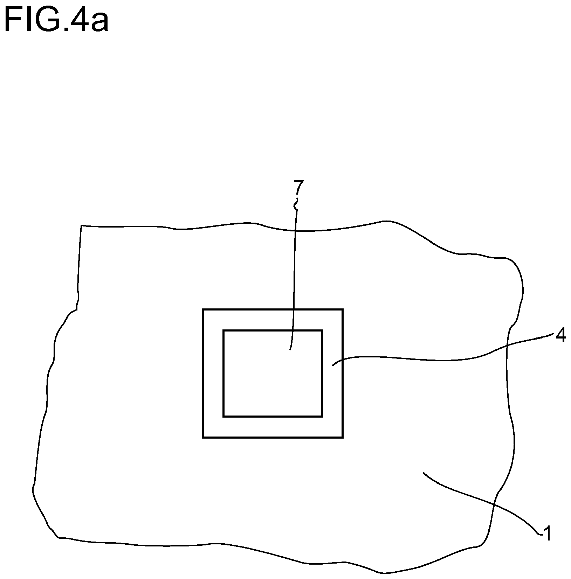

Figur 4 zeigt ein Fixierungselement 4 mit einer Kavität 7 im Schnitt auf einem ersten Bauteil 1. In Figur 4 ist der Zustand des ersten Bauteils 1 zu sehen, nachdem das Anspritzen mindestens eines Fixierungselementes 4 auf mindestens einer Seite 5 des ersten Bauteils 1 gemäß Schritt b) erfolgt ist. Daher ist die Kavität 7 noch nicht mit einem Matrixwerkstoff gefüllt. Die Fixierungselemente 4, die die Kavität 7 bilden, haben die Form eines Rechtecks.

Figur 4a zeigt eine Draufsicht auf ein erstes Bauteil 1, welches ein Fixierungselement 4 aufweist. Das Fixierungselement 4 hat die Form eines Quadrats in der Draufsicht. Somit ergibt sich insgesamt ein hohler, würfelförmiger Formkörper für das Fixierungselement 4, bei dem die von der einen Seite 5 des ersten Bauteils 1 abgewandte Seite des Würfels nicht vorhanden ist, so dass eine Kavität 7 vorhanden ist. Das erste Bauteil 1 besteht aus einer thermoplastischen Kunststoffmatrix, in der eine Verstärkungsfaseranordnung angeordnet ist. Das Fixierungselement 4 besteht ebenfalls aus einer thermoplastischen Kunststoffmatrix.

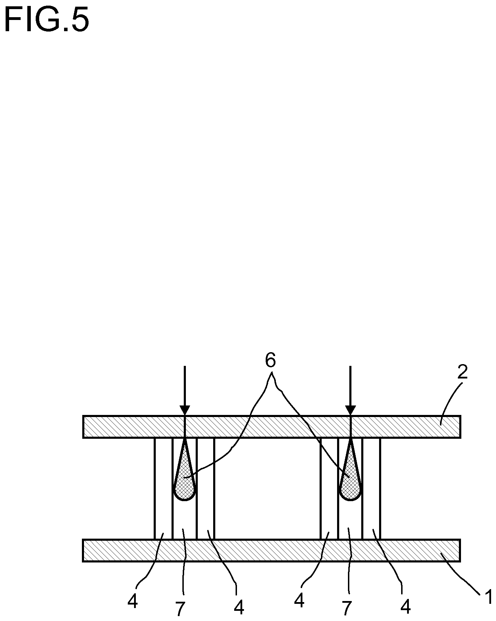

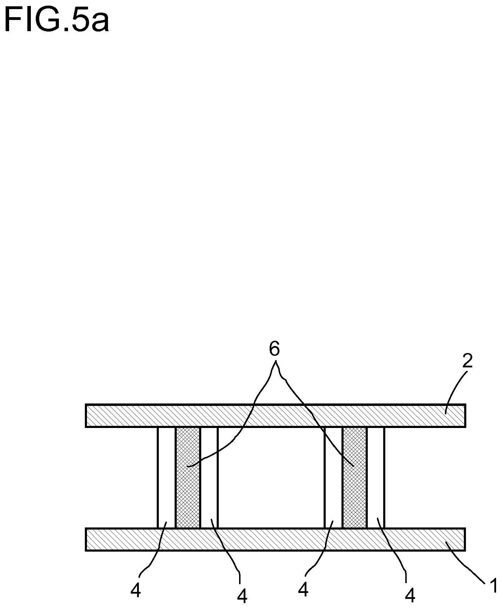

Figur 5 zeigt ein Stadium bei der Herstellung eines doppelschaligen Verbundwerkstoffbauteils aufgebaut aus einem ersten Bauteil 1 und einem zweiten Bauteil 2 während des Einspritzvorgangs. In Figur 5 ist der stoffschlüssige Verbindungsvorgang ersichtlich. Dabei ist das Einspritzen des Matrixwerkstoffs 6 durch das zweite Bauteil 2 in die Kavität 7 der Fixierungselemente 4 dargestellt. Dazu wird das Bauteil 2 lokal an den Stellen erwärmt, durch die der Matrixwerkstoff 6 durch das zweite Bauteil 2 gemäß Schritt d) des erfindungsgemäßen Verfahrens gespritzt wird. Es ist auch möglich, dass ein Metalldorn durch das zweite Bauteil 2 durchgeführt wird, damit der Matrixwerkstoff 6 durchgespritzt werden kann.

Figur 5a zeigt ein Stadium bei der Herstellung eines doppelschaligen Verbundwerkstoffbauteils aufgebaut aus einem ersten Bauteil 1 und einem zweiten Bauteil 2, nachdem der Schritt d) des vorliegenden erfindungsgemäßen Verfahrens durchgeführt worden ist. In Figur 5a ist die stoffschlüssige Verbindung zwischen dem Bauteil 1 und dem Bauteil 2 ersichtlich. Daher entspricht Figur 5a dem Stadium nach dem Schritt d) des erfindungsgemäßen Verfahrens. Der Matrixwerkstoff 6 entspricht dem Material der thermoplastischen Kunststoffmatrix des ersten Bauteils 1 und des zweiten Bauteils 2 sowie dem Materials des Fixierungselementes 4. Aufgrund dessen kommt es nach dem Schritt d) zu einer stoff-, form- und kraftschlüssigen Verbindung.

### Bezugszeichenliste

- 1: erste Bauteil
- 2: zweite Bauteil
- 4: Fixierungselement
- 5: Seite des ersten Bauteils
- 6: Matrixwerkstoff
- 7: Kavität
- 12: Seitenränder

## Patentansprüche

1. Verfahren zur Herstellung mehrschaliger Verbundwerkstoffbauteile, umfassend die Schritte:
a) Einlegen mindestens eines ersten Bauteils (1) in ein Spritzgusswerkzeug und gegebenenfalls Umformen des ersten Bauteils (1),
b) Anspritzen mindestens eines Fixierungselementes (4) auf mindestens eine Seite (5) des ersten Bauteils (1),
c) Einlegen mindestens eines zweiten Bauteils (2) in das Spritzgusswerkzeug und gegebenenfalls Umformen des zweiten Bauteils (2),
d) Verbinden des ersten Bauteils (1) über die das Fixierungselement (4) aufweisende Seite (5) mit dem zweiten Bauteil (2), wobei durch das zweite Bauteil (2) hindurch auf und/oder in das Fixierungselement (4) ein Matrixwerkstoff (6) eingespritzt wird.

2. Verfahren nach Anspruch 1, wobei das Fixierungselement (4) mindestens eine Kavität (7) aufweist.

3. Verfahren nach Anspruch 2, wobei die Kavität (7) ein Aspektverhältnis in einem Bereich von 1 : 1 bis 1 : 100 aufweist.

4. Verfahren nach einem der Ansprüche 2 bis 3, wobei beim Verbinden des ersten Bauteils (1) und zweiten Bauteils (2) ein Matrixwerkstoff (6) in die Kavität (7) des Fixierungselementes (4) eingespritzt wird.

5. Verfahren nach einem der Ansprüche 1 bis 4, wobei das erste Bauteil (1) und/oder das zweite Bauteil (2) eine Verstärkungsfaseranordnung und eine thermoplastische Kunststoffmatrix umfasst.

6. Verfahren nach Anspruch 5, wobei das Material des Matrixwerkstoffes (6) dem Material der thermoplastischen Kunststoffmatrix entspricht.

7. Verfahren nach einem der Ansprüche 2 bis 6, wobei beim Verbinden des ersten Bauteils (1) und zweiten Bauteils (2) in die Kavität (7) des Fixierungselementes (4) gespritzt wird und die Oberfläche der Kavität (7) zumindest teilweise schmilzt.

8. Verfahren nach einem der Ansprüche 1 bis 7, wobei durch die Umformung des ersten Bauteils (1) und/oder zweiten Bauteils (2) jeweils ein einschaliger Faserkunststoffverbund entsteht.

9. Verfahren nach einem der Ansprüche 1 bis 8, wobei das Fixierungselement (4) ausgewählt ist aus der Gruppe bestehend aus Rippen, Wölbungen, Sicken, Nuten, Stege oder Kombinationen davon.

10. Verfahren nach einem der Ansprüche 1 bis 9, wobei das erste Bauteil (1) und/oder das zweite Bauteil (2) ein langfaserverstärkter Thermoplast, ein endlosfaserverstärkter Thermoplast und/oder ein unidirektionales, verstärktes Tape ist.

11. Verfahren nach einem der Ansprüche 1 bis 10, wobei das erste Bauteil (1) und/oder das zweite Bauteil (2) ein Organoblech ist.

12. Verfahren nach einem der Ansprüche 1 bis 11, wobei das zweite Bauteil (2) vor dem Verbinden mit dem ersten Bauteil (1) auf eine Temperatur von bis zu 50 °C unter bis hin zu 50 °C über den Schmelzpunkt oder der Glasübergangstemperatur gebracht wird.

13. Verfahren nach einem der Ansprüche 1 bis 12, wobei nach und/oder beim Verbinden des ersten Bauteils (1) und zweiten Bauteils (2) die Seitenränder (12) des zweiten Bauteils (2) an das erste Bauteil (1) gepresst werden.

## Claims

1. A process for the production of multishell composite-material components, comprising the following steps:
a) insertion of at least one first component (1) into an injection mold and optionally subjecting the first component (1) to a forming process,
b) injection of at least one fixing element (4) onto at least one side (5) of the first component (1),
c) insertion of at least one second component (2) into the injection mold and optionally subjecting the second component (2) to a forming process,
d) bonding of the first component (1) to the second component (2) by way of the side (5) which has the fixing element (4), where a matrix material (6) is injected through the second component (2) onto and/or into the fixing element (4).

2. The process according to claim 1, where the fixing element (4) has at least one cavity (7).

3. The process according to claim 2, where the aspect ratio of the cavity (7) is in the range from 1:1 to 1:100.

4. The process according to claim 2 or 3, where during the bonding of the first component (1) and second component (2) a matrix material (6) is injected into the cavity (7) of the fixing element (4).

5. The process according to any of claims 1 to 4, where the first component (1) and/or the second component (2) comprises a reinforcing-fiber arrangement and a thermoplastic matrix.

6. The process according to claim 5, where the material of the matrix (6) is the same as the material of the thermoplastic matrix.

7. The process according to any of claims 2 to 6, where, during bonding of the first component (1) and second component (2), material is injected into the cavity (7) of the fixing element (4), and the surface of the cavity (7) melts at least to some extent.

8. The process according to any of claims 1 to 7, where the forming process to which the first component (1) and/or second component (2) is/are subjected in each case produces a single-shell fiber-plastics composite.

9. The process according to any of claims 1 to 8, where the fixing element (4) is selected from the group consisting of ribs, convex areas, beads, grooves, fillets, and combinations thereof.

10. The process according to any of claims 1 to 9, where the first component (1) and/or the second component (2) is a long-fiber-reinforced thermoplastic, a continuous-fiber-reinforced thermoplastic, and/or a unidirectional, reinforced tape.

11. The process according to any of claims 1 to 10, where the first component (1) and/or the second component (2) is an organopanel.

12. The process according to any of claims 1 to 11, where, before bonding to the first component (1), the second component (2) is brought to a temperature which is from up to 50°C below to up to 50°C above the melting point or the glass transition temperature.

13. The process according to any of claims 1 to 12, where, after and/or during bonding of the first component (1) and second component (2), the edge areas (12) of the second component (2) are pressed onto the first component (1).

## Revendications

1. Procédé de fabrication de composants multicouches en matériau composite, comprenant les étapes suivantes :
a) la disposition d'au moins un premier composant (1) dans un outil de moulage par injection et éventuellement la déformation du premier composant (1),
b) l'injection d'au moins un élément de fixation (4) sur au moins un côté (5) du premier composant (1),
c) la disposition d'au moins un deuxième composant (2) dans l'outil de moulage par injection et éventuellement la déformation du deuxième composant (2),
d) la liaison du premier composant (1) par le côté (5) comprenant l'élément de fixation (4) avec le deuxième composant (2), un matériau de matrice (6) étant injecté au travers du deuxième composant (2) et/ou dans l'élément de fixation (4).

2. Procédé selon la revendication 1, dans lequel l'élément de fixation (4) comprend au moins une cavité (7) .

3. Procédé selon la revendication 2, dans lequel la cavité (7) présente un rapport de longueur dans une plage allant de 1:1 à 1:100.

4. Procédé selon l'une quelconque des revendications 2 à 3, dans lequel, lors de la liaison du premier composant (1) et du deuxième composant (2), un matériau de matrice (6) est injecté dans la cavité (7) de l'élément de fixation (4).

5. Procédé selon l'une quelconque des revendications 1 à 4, dans lequel le premier composant (1) et/ou le deuxième composant (2) comprennent un agencement de fibres renforçantes et une matrice en plastique thermoplastique.

6. Procédé selon la revendication 5, dans lequel le matériau du matériau de matrice (6) correspond au matériau de la matrice en plastique thermoplastique.

7. Procédé selon l'une quelconque des revendications 2 à 6, dans lequel, lors de la liaison du premier composant (1) et du deuxième composant (2), une injection est réalisée dans la cavité (7) de l'élément de fixation (4) et la surface de la cavité (7) est au moins partiellement fondue.

8. Procédé selon l'une quelconque des revendications 1 à 7, dans lequel un composite fibres-plastique monocouche est formé à chaque fois par la déformation du premier composant (1) et/ou du deuxième composant (2).

9. Procédé selon l'une quelconque des revendications 1 à 8, dans lequel l'élément de fixation (4) est choisi dans le groupe constitué par les nervures, les cambrures, les moulures, les rainures, les traverses ou leurs combinaisons.

10. Procédé selon l'une quelconque des revendications 1 à 9, dans lequel le premier composant (1) et/ou le deuxième composant (2) sont un thermoplastique renforcé par des fibres longitudinales, un thermoplastique renforcé par des filaments et/ou une bande unidirectionnelle renforcée.

11. Procédé selon l'une quelconque des revendications 1 à 10, dans lequel le premier composant (1) et/ou le deuxième composant (2) sont une tôle organique.

12. Procédé selon l'une quelconque des revendications 1 à 11, dans lequel le deuxième composant (2) est porté avant la liaison avec le premier composant (1) à une température de jusqu'à 50 °C en dessous à jusqu'à 50 °C au-dessus du point de fusion ou de la température de transition vitreuse.

13. Procédé selon l'une quelconque des revendications 1 à 12, dans lequel, après et/ou lors de la liaison du premier composant (1) et du deuxième composant (2), les bordures latérales (12) du deuxième composant (2) sont pressées sur le premier composant (1).
